# EUROPEAN PATENT APPLICATION

(11) **EP 3 354 326 A1**
(43) Date of publication of application: **01.08.2018**
(21) Application number: 18153690.5
(22) Date of filing: 26.01.2018
(51) Int. Cl.: B01D 35/02, B01D 29/33, C02F 1/00, E03F 5/04, E03B 3/02

(54) **RAINWATER TREATMENT ASSEMBLY, CARTRIDGE CONTAINER, RAINWATER TREATMENT DEVICE, AND SUBSTRATE CARTRIDGE**

(30) Priority: 27.01.2017 NL 1042249
(71) Applicant: Wavin B.V., 8011 CW Zwolle (NL)
(72) Inventor: Determann, Matthias, 48716 Meppen-Bokeloh (DE); Brümmer, Günter, 49740 Haselünne (DE)
(74) Representative: Hoffmann Eitle

(57) **Abstract**

Rainwater treatment assembly comprising a cartridge container (20) with a container inlet and a container outlet, and comprising a substrate cartridge (30). The substrate cartridge (30) includes a substrate for treating rainwater and has at least one top entrance for being fluidly connected to the inlet, at least one side entrance for being fluidly connected to the inlet, and at least one exit for being fluidly connected to the outlet. The cartridge container (20) is configured to accommodate the substrate cartridge (30) and is dimensioned such that when the substrate cartridge (30) is accommodated, an inflow space (40) for receiving fluid is defined outside of the substrate cartridge (30), adjacent to the side entrance, and in fluid communication with the container inlet. The rainwater treatment assembly comprises a fluid guider (50) for directing at least a part of a fluid directly towards the top entrance of the substrate cartridge (30).

## Description

This disclosure relates to a rainwater treatment assembly comprising a cartridge container and a substrate cartridge. It further relates to a cartridge container and to a substrate cartridge as separate parts, respectively, as well as to a rainwater treatment device comprising a container. Further, the disclosure relates to respective methods of producing and of using of a rainwater treatment assembly, a cartridge container, a rainwater treatment device, and a substrate cartridge.

A known type of rainwater treatment assembly is for being installed and used underground. It comprises a cartridge container and a substrate cartridge to be accommodated in the container. The cartridge is provided with a substrate for filtering substances such as metallic particles out of rainwater.

Such an assembly is particularly useful near roads, where metal contaminations may occur, e.g., due to vehicle breaking and/or drainage of building roofs containing metal. The filtered water is fed back into the environment, for example, into a river, a lake, or into the groundwater.

To increase the lifespan, a substrate is preferably not wet all of the time. A known assembly comprises a temporary water storage tank in which a certain amount of rainwater can be collected. When the tank is full and overflows, the water is led on into the cartridge and is filtered. During periods of no or of very light rainfall, i.e., when the water throughput is low, the substrate runs dry.

A known type of substrate cartridge is provided with several water inflow openings including some at the top and some at the side of the cartridge. Water can, hence, simultaneously enter at a plurality of positions. This allows for a high water throughput, e.g., during periods of heavy rainfall.

The cartridge is accommodated in a container having a larger diameter than the cartridge. A gap between the outer circumferential sidewall of the cartridge and the inner circumferential wall of the container serves as a water inflow space. Rainwater can flow into said inflow space and enter the cartridge from there through the cartridge sidewall openings.

When the fluid throughput is low, e.g., during periods of light rainfall, water primarily gathers in the lower part of the inflow space. It thus flows into the cartridge from sidewall openings located at lower positions. When the throughput increases, e.g., during periods of heavy rainfall, the inflow space increasingly fills up. Consequently, water increasingly enters the cartridge from sidewall openings located at higher positions. At maximum throughput, the entire inflow space is filled, and water enters the cartridge from all of the sidewall openings and also from the openings in the top surface of the cartridge.

When the water throughput is low, water primarily enters the lower part of the cartridge. Therefore, merely the lower parts of the substrate are wet and are hence, worn more quickly than upper parts. Therefore, substrate cartridges need to be exchanged before their upper parts reach the end of their lifespan.

There is a need for a rainwater treatment assembly that addresses at least one of the abovementioned shortcomings. There is also a need for an improved cartridge container, an improved rainwater treatment device, and/or an improved substrate cartridge for use in a container.

Embodiments are defined by the claims below.

### GENERAL DESCRIPTION

One aspect of this disclosure relates to a rainwater treatment assembly comprising a cartridge container and a substrate cartridge. The container comprises a container inlet through which a fluid such as rainwater can enter the container and a container outlet through which the fluid can exit the device.

The cartridge includes at least one substrate for treating (e.g., filtering) rainwater, at least one top entrance for being fluidly connected to the container inlet, at least one side entrance for being fluidly connected to the container inlet, and at least one exit for being fluidly connected to the container outlet. The fluid connections between the side entrance (s) and the top entrance (s) and the container inlet are established when the cartridge is accommodated in the container, i.e., in the "accommodated condition". A fluid such as rainwater may flow into the container inlet and eventually enters the cartridge through the top entrance(s) and/or the side entrance(s).

The cartridge container is for accommodating the cartridge. The container is dimensioned such that when the cartridge is accommodated, an inflow space for receiving fluid is defined inside of the container but outside of the cartridge, adjacent to the side entrance, and in fluid communication with the container inlet. Thus, a fluid may flow into the container, and into the inflow space in particular. It may then enter the cartridge from the inflow space through the side entrance(s).

The rainwater treatment assembly further comprises a fluid guider for directing at least a part of a fluid entering the cartridge (preferably all of the fluid) towards the top entrance(s) of the cartridge. Directing the fluid towards the top entrance means directing the fluid is directed in the direction of the top entrance. Therefore, fluid preferentially enters the cartridge from the top (through the top entrance(s)) rather than flowing into the inflow space and entering the cartridge from the side (through the side entrance(s)).

When the fluid throughput is so high that it exceeds the capacity for fluid entry into the cartridge through the top entrance(s), increasing amounts of fluid flow into the inflow space and enter the cartridge through the side entrance(s).

In contrast, when the fluid throughput is low, fluid is preferentially led into the cartridge container at the top. Consequently, the fluid preferably flows through the cartridge from top to bottom when the fluid throughput is low, e.g., during periods of light rainfall. Thus, lower parts of the substrate(s) are prevented from being worn unnecessarily quickly. The wear of the substrates is more homogeneous along the top-bottom-direction also at lower fluid throughputs. Put differently, substrates used in a rainwater treatment assembly according to this disclosure are worn particularly evenly. When the rainfall is heavy, excessive rainwater flows past/off the top of the cartridge, and enters the cartridge through the side entrance(s) via the inflow space. Thus, high fluid throughput capacity is also provided.

In the case of some embodiments, when the inflow space is increasingly used, the fluid first flows into the cartridge from a lower part of the inflow space. The fuller the inflow space gets, the more fluid also enters into the cartridge from upper areas so that an increasingly even distribution and thus even wear of the substrate(s) is achieved.

The rainwater treatment assembly may be installed and used underground (with or without the cartridge accommodated in the container). A fluid such as rainwater may enter the container at the container inlet. At some point, the fluid is led into the cartridge. It is treated by the one or several substrates. Then, it is led out of the cartridge and flows on in the direction of the container's outlet.

The cartridge may contain a single substrate but preferably it comprises two or more substrates. The substrate(s) is/are configured to filter filterable substances in the fluid such as mineral hydrocarbons, and/or dissolved metallic particles, especially dissolved heavy metals.

Preferably, the exit is located in a lower part of the cartridge. More preferably, the exit is located at a lower end of the cartridge. The exit may be provided in a bottom surface of the cartridge.

Preferably, the top entrance is located in an upper part of the cartridge. More preferably, the top entrance is located at an upper end of the cartridge. The top entrance may be provided in a top surface of the cartridge.

Preferably, the cartridge comprises a sidewall, and the side entrance is preferably located in said sidewall.

Preferably, the container has at least one sidewall. An inflow space is provided between the cartridge (when in accommodated condition, i.e., when being accommodated in the container) and the container sidewall. A fluid may, hence, flow into the inflow space and then enter the cartridge from the side (via the side entrance(s)).

The terms "upper" and "lower" used when referring to the upper and lower parts/ends of the cartridge and the term "top" (e.g., in "top entrance") pertain to the cartridge's orientation when the rainwater treatment assembly is brought into its operating position. Put differently, the terms pertain to the orientation when gravity pulls (substantially) in the direction from the upper part / top towards the lower part. The assembly is, hence, configured so as to be oriented such that a fluid flows into the cartridge at an upper position and flows out of the cartridge at a lower position under the influence of gravity.

The cartridge does not necessarily extend up to the top of the container. A gap may be provided between the top of the cartridge and the container.

The cartridge container may be provided with a single sidewall. The container may, e.g., at least in part have a cylindrical shape, and the sidewall may be a circumferential cylindrically shaped sidewall. Alternatively, the container may comprise two or several sidewalls. For example, the container may have a rectangular (e.g., quadratic) cross-sectional shape and may, hence, comprise four sidewalls.

The fluid guider may be connected to the container or to another part of the assembly such as (preferably) the container). Alternatively, the fluid guider may be connected to the cartridge. Further, the fluid guider may be made as a single piece, it may be made of separate parts, and/or it may be integrally formed with another part of the device or of the cartridge. For example, it may be interrupted and partially connectable to the container (or another part of the assembly) and partially to the cartridge.

Preferably, the container comprises a sidewall with an opening or a circumferential edge via which a fluid can flow into the container, said opening or edge being located above the top entrance of the cartridge. The opening or edge may extend fully around the circumference of the container or it may merely extend around one or several parts thereof. The edge may be thin or it may comprise form part of an extended surface over which a fluid can flow before entering into the container.

Preferably, the fluid guider is configured to extend from the opening or circumferential edge into the container by a distance which is equal to or larger than a distance between the container sidewall and the cartridge when in accommodated condition so that a fluid flowing off the fluid guider is directly directed towards the top entrance of the cartridge. The extension direction into the container is preferably substantially perpendicular to part of the sidewall of the container located adjacent to the fluid guider. More preferably, the distance by which the fluid guider extends into the container is larger than the distance between the sidewall and the cartridge.

According to an embodiment, the cartridge and the container are both at least partially cylindrically shaped, and the fluid guider is at least partially ring-shaped. Preferably, the inflow space between the cylindrically shaped circumferential inner sidewall of the container and the cylindrically shaped outer circumferential wall of the cartridge has a width of 20-30mm, and more preferably of 24-26mm.

Preferably, when the fluid guider is ring-shaped, an inner diameter D2 of the ring shape is smaller than the diameter D1 of the cartridge, i.e., D2 < D1. The ring shape of the fluid guider is preferably centered on a central axis of the cartridge. D2<D1 ensures that a fluid heads towards the top surface of the cartridge rather than directly heading for the inflow space. Thus, a fluid preferentially enters into the cartridge from the top rather than from a side via the inflow space.

According to an embodiment, the fluid guider is flexible. This promotes an easy maintenance and/or exchanging of a cartridge as the fluid guider can make way by virtue of its flexibility.

According to an embodiment, the opening in the sidewall (or the openings in the sidewall, i.e., the side entrance(s)) is located above of the cartridge by a distance such that water entering at speeds of 0.05 l/s or more falls on top of the cartridge. Preferably, it is located so far up that water entering at speeds of 0.2 l/s or more is directed directly towards the top entrance(s) of the cartridge. Preferably, this distance lies in a range of 5 to 100mm, and more preferably in a range of 28 to 32 mm.

According to an embodiment, the fluid guider is placed directly on/at the cartridge, preferably at the top of the cartridge. The outer diameter of the fluid guider may be larger than the inner diameter of the container.

Preferably, the opening comprises at least one bore in a sidewall of the container. The container sidewall may comprise one or several openings.

The rainwater treatment assembly preferably further comprises a temporary fluid storage tank fluidly connected to the inlet. The temporary fluid storage tank is preferably further fluidly connected to the container such that fluid overflowing from the tank flows into the container.

Preferably, the temporary fluid storage tank is located adjacent to the container such that overflowing fluid can, e.g., flow over a circumferential edge surface of the container to enter the container.

Due to the storing capacity of the temporary fluid storage tank, a fluid such as rainwater can gather therein. The substrate(s) in the container is (are) therefore not always wet but run(s) dry. Thus, the substrate(s) is/are only wet when actively treating/filtering the fluid running through the device. This prevents anaerobe conditions that could lead to reduction reactions in the substrate(s) and/or reduce the lifespan of the substrate(s).

According to an embodiment, the assembly comprises a rainwater treatment device with a fluid inlet through which fluid can enter the device and a fluid outlet through which fluid can exit the device. The device may comprise the container and/or the temporary fluid storage tank.

Preferably, a fluid flow path between the device inlet of the assembly and the container comprises at least one bent pipe piece. The bent pipe piece makes the fluid flow path longer. Thus, the flow speed is reduced. This increases the filtering efficiency of the assembly. According to some embodiments, the bent pipe piece comprises at least one bend with an angle of at least 45°, and even more preferably, at least one 90° bend.

According to an embodiment, the rainwater treatment device of the assembly further comprises a sediment settling space. Sediments, ascending substances, and/or liquids can settle down in the settling space. The settled substances may be retained by one or several dip tubes/dip elements, e.g., provided at the bottom of the device (as a type of manhole).

Preferably, the parts of the assembly are arranged in such an order that a fluid flowing through the assembly (in the condition wherein the cartridge is accommodated in the container of the device) reaches the following components of the assembly in this order: bent pipe piece, sediment settling space, temporary fluid storage tank, container, cartridge, outlet.

Preferably, the assembly consists of a rainwater treatment device comprising all of the components except for the cartridge, and of a cartridge.

Preferably, the rainwater treatment device has a modular construction with separable modules. This increases the versatility of the device and allows changing the relative orientation of components. This simplifies connection with other elements etc.

According to an embodiment, the device comprises an inflow module. The inflow module is provided with the inlet of the device and is axially rotatable with respect to at least one other module. Thus, the relative orientation of the inlet can be changed. The inlet is preferably oriented in a lateral direction with respect to a central axis of at least one (preferably at least partially cylindrically shaped) further module. The inflow module may be axially rotated so as to orient the inlet so as to conform to the surrounding (e.g., the orientation of a part to be connected to the inlet) in which the assembly is used/installed.

Preferably, the device comprises a treatment module including the container.

Preferably, the device comprises a settling module comprising the above-described sediment settling space. The sediment settling space may be provided at the floor of a shaft/manhole part of the device.

According to an embodiment, the substrate cartridge is at least partially cylindrically shaped and comprises a centrally located hollow space connected to the bottom of the substrate cartridge. The space being hollow in this context means that no substrate is provided in said space. Fluid can be drained out of the cartridge through the hollow space.

Preferably, the bottom of the substrate cartridge comprises perforations. These perforations are preferably located around the central hollow space.

According to an embodiment, the at least one substrate comprises a filter material, preferably selected from the group consisting of iron oxide hydrate, active carbon and/or zeolite, or any combination thereof. When a fluid such as rainwater flows through the assembly (in particular: the device), a chemical reaction takes place in the substrate. The fluid is cleansed from metallic particles as the latter get bound to the substrate.

It is preferable for the cartridge to be separately exchangeable/replaceable. In other words, it is preferable if an old cartridge is removable from the device and replaceable with a new one.

Another aspect of this disclosure relates to a cartridge container for forming part of an assembly according to any one of the formerly described embodiments, the container comprising a fluid guider, optionally including any of the preferable container and/or fluid guider features described above.

Another aspect of this disclosure relates to a rainwater treatment device for forming part of an assembly according to any one of the formerly described embodiments, the device comprising a fluid guider, optionally including any of the preferable device and/or fluid guider features described above.

Another aspect of this disclosure relates to a substrate cartridge for forming part of an assembly according to any one of the formerly described embodiments, the cartridge comprising a fluid guider, optionally including any of the preferable cartridge and/or fluid guider features described above.

The disclosure also relates to the use of a rainwater treatment assembly, a cartridge container, a rainwater treatment device, and/or a substrate cartridge according to any one of the described embodiments for treating rainwater. The use may take place above ground and/or underground.

In addition, the disclosure also relates to a method of producing a rainwater treatment assembly, a cartridge container, a rainwater treatment device, and/or a substrate cartridge according to any one of the previously described embodiments.

Additional advantages and features of the present disclosure, that can be realized on their own or in combination with one or several features discussed above, insofar as the features do not contradict each other, will become apparent from the following description of preferred embodiments.

The description is given with reference to the accompanying drawings, in which:

### BRIEF DESCRIPTION OF THE DRAWINGS

In the following description accompanying the various figures, like parts are denoted with like reference signs.
- Fig. 1A: depicts a perspective view of an embodiment of a rainwater treatment device forming part of an assembly according to the present disclosure;
- Fig. 1B: depicts a sectional view of an embodiment of a rainwater treatment device forming part of an assembly according to the present disclosure;
- Fig. 1C: depicts a sectional view of an embodiment of a rainwater treatment assembly wherein the cartridge is accommodated in the container of the device (accommodated condition);
- Fig. 1D: depicts a perspective of an embodiment of a rainwater treatment assembly cut in half so as to expose the inside wherein the cartridge is accommodated in the container of the device (accommodated condition);
- Fig. 2A: depicts a cartridge container comprising a substrate cartridge according to the prior art;
- Fig. 2B: depicts a sectional view of a cartridge container containing a substrate cartridge according to the prior art;
- Fig. 3A: depicts a cartridge container comprising a substrate cartridge according to the present disclosure;
- Fig. 3B: depicts a sectional view of a cartridge container containing a substrate cartridge according to the present disclosure;
- Fig. 4A: is a top view of an embodiment of a cartridge container comprising a substrate cartridge according to the present disclosure; and
- Fig. 4B: is a sectional view of an embodiment of a cartridge container comprising a substrate cartridge.

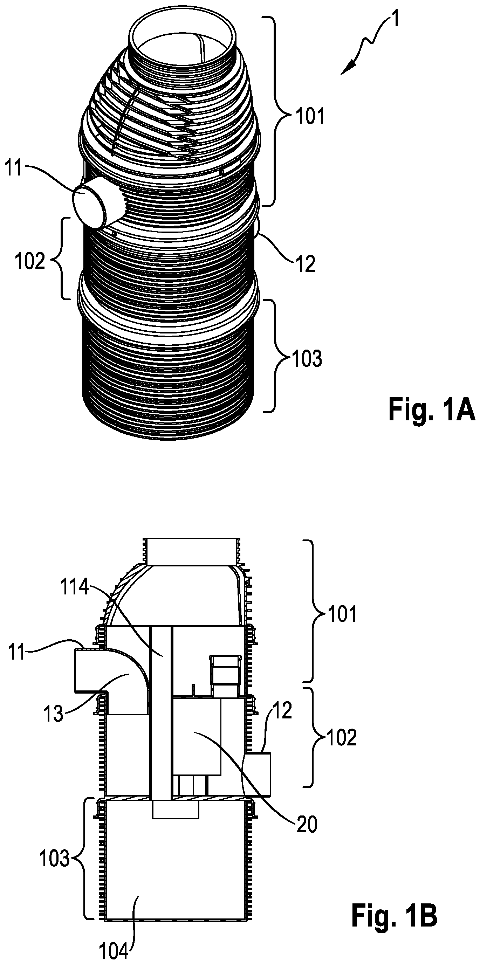

Fig. 1A depicts a perspective view of an embodiment of a rainwater treatment device 1 being a part of an assembly according to the present disclosure. The rainwater treatment device 1 is configured as a manhole.

The rainwater treatment device 1 is configured to treat, and especially to filter, a fluid such as rainwater. The device 1 comprises a fluid inlet 11 through which rainwater can enter as well as an outlet 12 through which treated (filtered) rainwater can exit.

The embodiment of a rainwater treatment device 1 of Fig. 1A is configured to be installed as an underground shaft. It can be used for filtering contaminating substances such as metallic particles out of rainwater and/or (e.g.) to filter sand and one or several types of oils.

The rainwater treatment device 1 has a modular construction comprising separable modules. This embodiment has three modules. However, the disclosure also relates to embodiments comprising one, two, four, or more modules.

The device 1 comprises an inflow module 101 which is provided with the inlet 11. There is provided a treatment module 102 comprising the filtering element configured to filter rainwater. Further, the device 1 comprises a settling module 103 comprising a sediment settling space 104 at the bottom of the shaft/manhole. In the sediment settling space 104 (see Fig. 1B), sediments, ascending substances, and/or liquids can settle.

The modules 101, 102, 103 are separable units. The module 101 may be an integral part or it may be made of separate parts, e.g., an inlet pipe and a cone. The modules 101, 102, and 103 are axially rotatable with respect to one another around a central longitudinal axis of the device 1. By rotating the inflow module 101, for example, the inlet 11 can be oriented differently in order to adapt the device 1 for a particular use according to the given surrounding.

Likewise, also the orientation of the outlet 12 can be adapted in a convenient way by orienting the treatment module 102 accordingly (see Fig. 1B).

As illustrated in Fig. 1B, the fluid flow path starting from the inlet 11 leads to a bent pipe piece 13 which prolongs the fluid path and makes a fluid such as rainwater flow slower. This may enhance the filtering efficiency of the assembly.

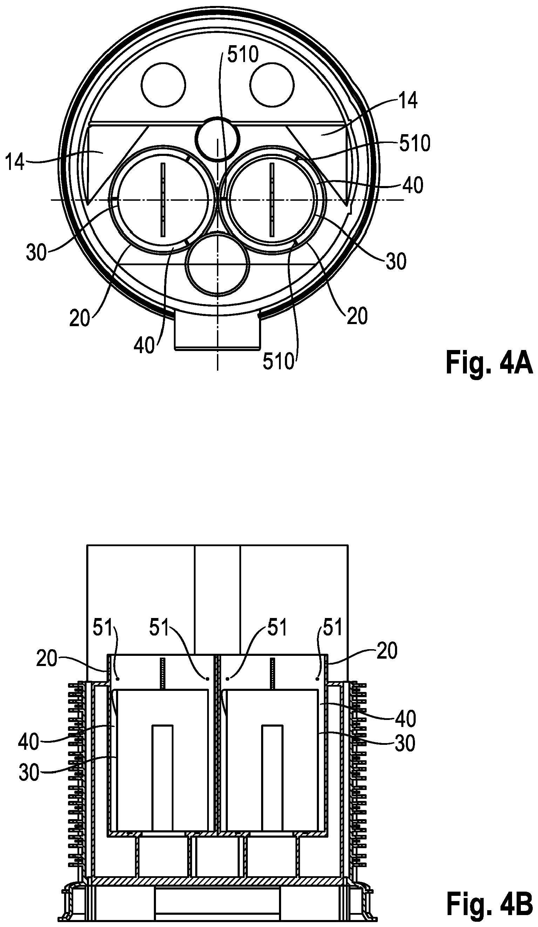

After flowing through the bent pipe piece 13, rainwater is led on into the sediment settling space 104. Then, the water is collected in a temporary fluid storage tank 14 (not shown in Fig. 1B but shown for an embodiment in Fig. 4A). Due to the provision of the temporary fluid storage tank 14, water needs to gather up to a certain degree before the temporary fluid storage tank 14 overflows and before the rainwater can flow on in the device 1. Thus, the filters used in the device 1 are not wet all of the time. They in fact run dry when there is, for example, no or only very light rainfall, i.e., when there is little or even no water throughput.

Further, a cartridge container 20 is provided in which at least one substrate cartridge 30 is accommodated (not shown in Fig. 1B). The cartridge 30 is used for treating a fluid such as rainwater. When the temporary fluid storage tank 14 overflows, the rainwater flows over an upper circumferential edge and enters the cartridge container 20.

The device 1 also comprises a pipe 114 which may serve as a form of cleaning opening. The pipe 114 provides accessibility to lower parts of the device (e.g., to the sediment settling space 104).

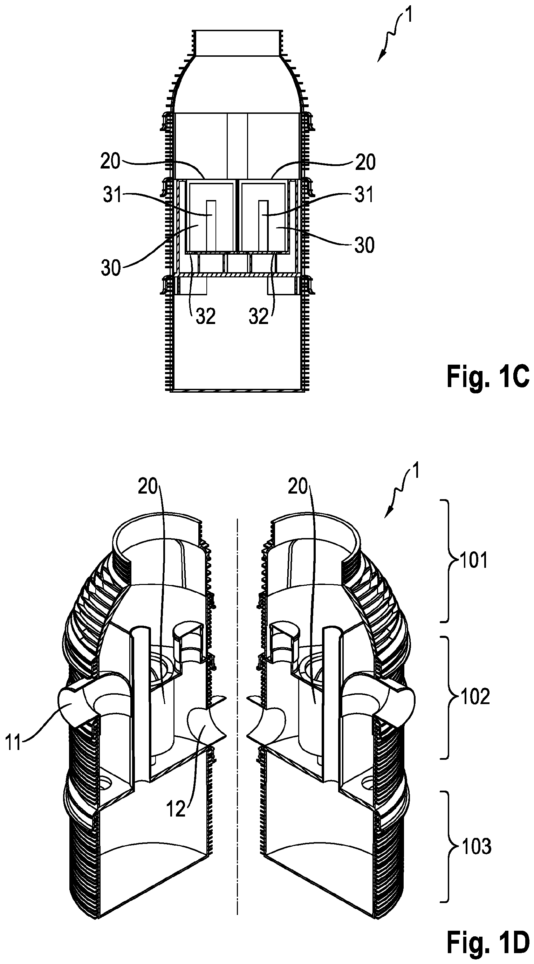

In the case of the embodiment of Fig. 1, the device 1 includes two cartridge containers 20 accommodating a substrate cartridge 30 each provided with a filtering substrate (see Fig. 1C). In other words, Fig. 1C shows the accommodated condition wherein the substrate 30 is accommodated in the container 20. However, the present disclosure is not limited to embodiments comprising two cartridge containers with two substrate cartridges. Other embodiments may merely comprise a single container with a single or with several cartridge or several containers with one or several cartridges, each comprising one or several filtering substrates.

Fig. 1D depicts a perspective view of a rainwater treatment assembly with a device 1 cut open along a plane extending in the top-bottom direction (such that gravity points in the vertical direction in the image plane) so as to reveal the inside. Fig. 1D shows the accommodated condition wherein the substrate 30 is accommodated in the container 20.

As shown in Fig. 1D, the containers 20 of this embodiment are cylindrically shaped. Also the substrate cartridges 30 are substantially cylindrically shaped (see Fig. 1C) and they comprise a centrally located hollow space 31 that is connected to a bottom 32 of the respective substrate cartridge 30.

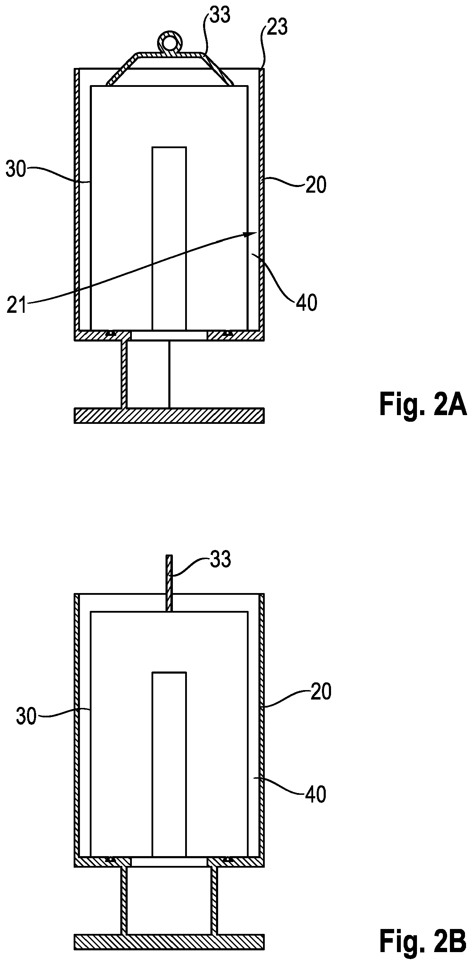

Figs. 2A and 2B depict two sectional views through a cartridge container 20 comprising a substrate cartridge 30 according to the prior art. The sectional planes of Figs. 2A and 2B are perpendicular to one another.

The cartridge 30 is provided with a handle 33 enabling a user to conveniently insert and remove the cartridge 30. This may promote an efficient cartridge replacement.

The cartridge container 20 comprises an inner circumferential sidewall 21 having a slightly larger diameter than the diameter of the inserted cartridge 30. The space in-between is an inflow space 40 which can fill up with a fluid such as rainwater and via which the rainwater can enter the cartridge 30 from the side.

When water overflows the temporary fluid storage tank 14 as depicted in Fig. 4A, water can flow into the inflow space 40 and enter the cartridge 30 from there (i.e., through side entrances of the cartridge 30).

As the water throughput becomes higher, the inflow space 40 increasingly fills up so that rainwater enters the cartridge 30 from increasingly higher positions. At some point, when inflow space 40 is completely filled up, rainwater also piles up on top of the cartridge and enters the cartridge 30 through openings provided there (i.e., the top entrances of the cartridge 30).

An inconvenience is associated with the fact of lower parts of the cartridge 30 are supplied with more water than higher parts, especially at low throughput, for example, when there is a period of light rainfall. This means that the parts of a filtering substrate located in the lower part of the cartridge 30 are worn far more quickly than parts located in an upper part.

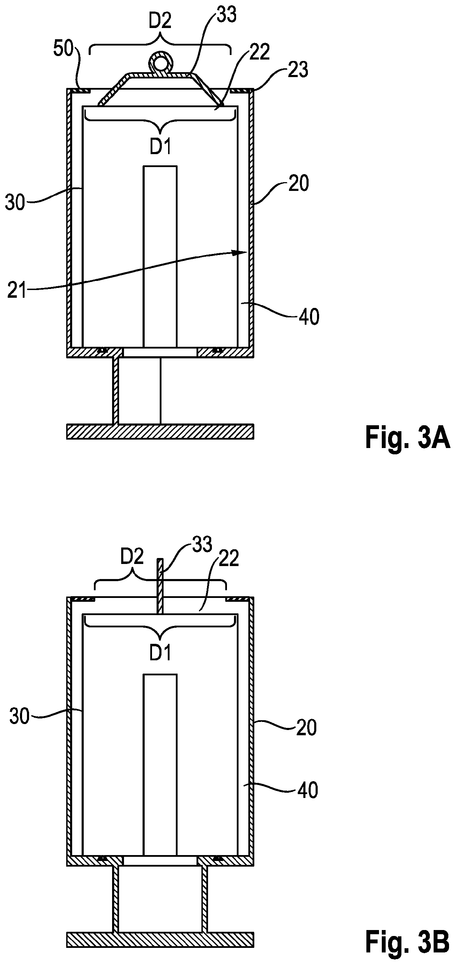

Figs. 3A and 3B depict an embodiment container 20 including a cartridge 30 in line with the present disclosure. The sectional planes of the views of Figs. 3A and 3B are mutually orthogonal.

An inflow space 40 is provided between the inner circumferential sidewall 21 of the container 20 and the outer sidewall of the cartridge 30 provided with side entrances to let fluid flow into the cartridge 30 from the inflow space 40.

In the case of the embodiments of Figs. 3A and 3B, a fluid guider 50 for directing a fluid towards a top 22 of the cartridge 20 (rather than primarily towards the inflow space 40), i.e., for directing a fluid directly towards the top entrances of the cartridge, is provided.

The fluid guider 50 of this embodiment is a flexible part. This enables an easy exchanging of the cartridge 30.

This embodiment comprises of ring-shaped fluid guider 50. An inner diameter D2 of the ring shape is smaller than a diameter D1 of the cartridge 30. This ensures that rainwater entering the container 20 first comes into contact with the top 22 of the cartridge 20 (or at least with an area above of said top 22). Thus, rainwater first has the tendency to enter the cartridge 30 from the top. When the ring-shaped fluid guider 50 is directly connected to the container 20, the fluid guider 50 is preferably made of polyethylene, polypropylene, thermoplastic elastomer and/or rubbers like EPDM or SBR (or any combination thereof).

Merely if the fluid throughput is high, for example, during periods of heavy rain, the area above of the cartridge 20 fills up and rainwater also starts filling up the inflow space 40 so as to increasingly also enter the cartridge 30 from the side. Therefore, the cartridge is also quite homogeneously supplied with water throughout its entire longitudinal extension in a top-bottom direction (the extension direction of the gravitational force) during periods of light rainfall. Therefore, the substrate filters inside of the cartridge 30 may be worn more homogeneously. Consequently, the lifespan of a cartridge 30 may be prolonged.

The sidewall 21 of the container 20 comprises a circumferential edge 23 over which fluid can flow to enter the container 20. In the case of the embodiment of Fig. 2, rainwater has the tendency to flow over said edge 23 and first enter the inflow space 40. However, in the case of the embodiment of Fig. 3, the fluid guider 50 extends from the circumferential edge 23 into the container 30 in a direction substantially perpendicular to the sidewall 21 by a distance which is larger than a distance between the sidewall 21 and the cartridge 30 so that rainwater flowing off the fluid guider 50 is directly directed towards the top entrances on the top surface of the cartridge 30.

Figs. 4A and 4B depict a top view and a sectional view of another embodiment of a rainwater treatment device comprising two containers 20 with one cartridge 30 each. Fig. 4A also depicts two temporary fluid storage tanks 14. Further, an inflow space 40 is provided in each of the containers 20 (see Figs. 4A and 4B). However, in the case of this embodiment, the fluid guider 50 is provided in the form of bores 51 in the sidewall 21 of the container 20 (see Fig. 4B). In addition, three spacer elements 510 are provided per container 20 (see Fig. 4A) which serve the purpose of promoting a good positioning of the cartridges 30 in the containers 20, respectively.

The openings in the form of the bores 51 (see Fig. 4B) are located above of the top of the cartridge 30 such that when rainwater enters at speeds of 0.05 l/s or more, it is directly directed towards the top entrances in the top surface of the cartridge 30. The height difference between the position of the bores 51 (or other types of openings located in the sidewall 21 of the containers 20) may be selected in relation to the positional height of the top of the respective cartridge 30 such that water entering at the desired minimum speed preferentially impinges on the top surface of the cartridge rather than being led into the inflow space which is merely preferred for high throughput.

Many additional variations and modifications are possible and are understood to fall within the framework of the invention.

Further disclosure is provided in the following paragraphs:
1. A rainwater treatment assembly comprising a cartridge container with a container inlet and a container outlet, and comprising a substrate cartridge;
   the cartridge including a substrate for treating rainwater, the cartridge having at least one top entrance for being fluidly connected to the container inlet, at least one side entrance for being fluidly connected to the container inlet, and at least one exit for being fluidly connected to the container outlet;
   wherein the cartridge container is configured to accommodate the substrate cartridge and is dimensioned such that when the cartridge is accommodated, an inflow space for receiving fluid is defined outside of the cartridge, adjacent to the side entrance, and in fluid communication with the container inlet; and
   wherein the rainwater treatment assembly comprises a fluid guider for directing at least a part of a fluid directly towards the top entrance of the cartridge.
2. A rainwater treatment assembly according to paragraph 1, wherein the container comprises a sidewall with an opening or a circumferential edge via which a fluid can flow into the container, said opening or edge being located above the top entrance of the cartridge when in accommodated condition.
3. A rainwater treatment assembly according to paragraph 2, wherein the fluid guider is configured to extend from the opening or edge into the container by a distance which is equal to or larger than a distance between the sidewall and the cartridge when in accommodated condition so that a fluid flowing off the fluid guider is directed directly towards the top entrance of the cartridge.
4. A rainwater treatment assembly according to any one of the preceding paragraphs, wherein the cartridge and the container are at least partially cylindrically shaped, and the fluid guider is at least partially ring-shaped.
5. A rainwater treatment assembly according to paragraph 4, wherein the fluid guider is ring-shaped and an inner diameter D2 of the ring shape is smaller than a diameter D1 of the cartridge (D2<D1), the ring shape preferably being centered on a central axis of the cartridge.
6. A rainwater treatment assembly according to any one of paragraphs 2 to 5, wherein the fluid guider is flexible.
7. A rainwater treatment assembly according to paragraph 2 or 3, wherein the opening is located above of the cartridge in accommodated condition by a distance such that water entering at speeds of 0.05 l/s or more is directed directly towards the top entrance of the cartridge.
8. A rainwater treatment assembly according to paragraph 7, wherein the opening comprises at least one bore in a sidewall of the container.
9. A rainwater treatment assembly according to any one of the previous paragraphs, further comprising a temporary fluid storage tank fluidly connected to the inlet, the temporary fluid storage tank being fluidly connected to the container such that fluid overflowing the tank flows into the container.
10. A rainwater treatment assembly according to any one of the previous paragraphs, further comprising a rainwater treatment device with a fluid inlet and a fluid outlet, wherein a fluid flow path between the fluid inlet and the container comprises at least one bent pipe piece.
11. A rainwater treatment assembly according to any one of the previous paragraphs, further comprising a rainwater treatment device with a sediment settling space.
12. A rainwater treatment assembly according to any one of the previous paragraphs, further comprising a rainwater treatment device, the rainwater treatment device having a modular construction comprising separable modules.
13. A rainwater treatment assembly according to paragraph 12, the device comprising an inflow module, wherein the inflow module is provided with the inlet, and the inflow module is axially rotatable with respect to at least one other module so as to change the orientation of the inlet.
14. A rainwater treatment assembly according to paragraph 12 or 13, the device comprising a treatment module including the container.
15. A rainwater treatment assembly according to any one of paragraphs 12 to 14 as dependent on paragraph 11, comprising a settling module comprising the sediment settling space.
16. A rainwater treatment assembly according to any one of the previous paragraphs, wherein the substrate cartridge is at least partially cylindrically shaped and comprises a centrally located hollow space connected to a bottom of the substrate cartridge.
17. A rainwater treatment assembly according to paragraph 16, wherein the bottom of the substrate cartridge comprises perforations.
18. A rainwater treatment assembly according to any one of the previous paragraphs, wherein the at least one substrate comprises a filter material, preferably selected from the group consisting of iron oxide hydrate, active carbon and/or zeolite.
19. A rainwater treatment assembly according to any one of the previous paragraphs, wherein the cartridge comprises a top surface, and the top entrance is located in the top surface.
20. A rainwater treatment assembly according to any one of the previous paragraphs, wherein the cartridge comprises a bottom surface, and the exit is located in the bottom surface.
21. A rainwater treatment assembly according to any one of the previous paragraphs, wherein the cartridge comprises a side surface, and the side entrance is located in the side surface.
22. Cartridge container for a rainwater treatment assembly according to any one of the previous paragraphs, the cartridge container comprising the fluid guider.
23. Rainwater treatment device for a rainwater treatment assembly according to any one of paragraphs 10 to 15, the rainwater treatment device comprising the fluid guider.
24. Substrate cartridge for a rainwater treatment assembly according to any one of paragraphs 1 to 21, the substrate cartridge comprising the fluid guider.
25. Combination of a cartridge container and a substrate cartridge according to any one of paragraphs 1 to 21.
26. Combination of a rainwater treatment device and a substrate cartridge according to any one of paragraphs 10 to 15.
27. Use of a rainwater treatment assembly according to any one of paragraphs 1 to 21 to treat rainwater.
28. Use of a cartridge container according to paragraph 22 to treat rainwater.
29. Use of a rainwater treatment device according to paragraph 23 to treat rainwater.
30. Use of a cartridge according to paragraph 24 to treat rainwater.
31. Method of producing a rainwater treatment assembly according to any one of paragraphs 1 to 21.
32. Method of producing a cartridge container according to paragraph 22.
33. Method of producing a rainwater treatment device according to paragraph 23.
34. Method of producing a cartridge according to paragraph 24.

## Claims

1. A rainwater treatment assembly comprising a cartridge container with a container inlet and a container outlet, and comprising a substrate cartridge;
the cartridge including a substrate for treating rainwater, the cartridge having at least one top entrance for being fluidly connected to the container inlet, at least one side entrance for being fluidly connected to the container inlet, and at least one exit for being fluidly connected to the container outlet;
wherein the cartridge container is configured to accommodate the substrate cartridge and is dimensioned such that when the cartridge is accommodated, an inflow space for receiving fluid is defined outside of the cartridge, adjacent to the side entrance, and in fluid communication with the container inlet; and
wherein the rainwater treatment assembly comprises a fluid guider for directing at least a part of a fluid directly towards the top entrance of the cartridge.

2. A rainwater treatment assembly according to claim 1, wherein the container comprises a sidewall with an opening or a circumferential edge via which a fluid can flow into the container, said opening or edge being located above the top entrance of the cartridge when in accommodated condition.

3. A rainwater treatment assembly according to claim 2, wherein the fluid guider is configured to extend from the opening or edge into the container by a distance which is equal to or larger than a distance between the sidewall and the cartridge when in accommodated condition so that a fluid flowing off the fluid guider is directed directly towards the top entrance of the cartridge.

4. A rainwater treatment assembly according to any one of the preceding claims, wherein the cartridge and the container are at least partially cylindrically shaped, and the fluid guider is at least partially ring-shaped, wherein the fluid guider is preferably ring-shaped and an inner diameter D2 of the ring shape is smaller than a diameter D1 of the cartridge (D2<D1), the ring shape preferably being centered on a central axis of the cartridge.

5. A rainwater treatment assembly according to any one of the previous claims, wherein the fluid guider is flexible.

6. A rainwater treatment assembly according to claim 2 or 3, wherein the opening is located above of the cartridge in accommodated condition by a distance such that water entering at speeds of 0.05 l/s or more is directed directly towards the top entrance of the cartridge, the opening preferably comprising at least one bore in a sidewall of the container.

7. A rainwater treatment assembly according to any one of the previous claims, further comprising a rainwater treatment device with a fluid inlet and a fluid outlet, wherein a fluid flow path between the fluid inlet and the container comprises at least one bent pipe piece, the rainwater treatment device preferably having a modular construction comprising separable modules, preferably including an inflow module, wherein the inflow module is provided with the inlet, and the inflow module is axially rotatable with respect to at least one other module so as to change the orientation of the inlet, preferably a treatment module including the container, and preferably a settling module comprising the sediment settling space, the rainwater treatment device preferably comprising the fluid guider.

8. A rainwater treatment assembly according to any one of the previous claims, wherein the substrate cartridge is at least partially cylindrically shaped and comprises a centrally located hollow space connected to a bottom of the substrate cartridge, the bottom of the substrate cartridge preferably comprising perforations.

9. A rainwater treatment assembly according to any one of the previous claims, wherein the at least one substrate comprises a filter material, preferably selected from the group consisting of iron oxide hydrate, active carbon and/or zeolite.

10. A rainwater treatment assembly according to any one of the previous claims, wherein the cartridge comprises a top surface and a side surface, and the top entrance is located in the top surface and the side entrance is located in the side surface.

11. A rainwater treatment assembly according to any one of the previous claims, wherein the fluid guider is configured to preferentially lead fluid into the cartridge container through the top entrance rather than through the side entrance.

12. Cartridge container for a rainwater treatment assembly according to any one of the previous claims, the cartridge container comprising the fluid guider.

13. Substrate cartridge for a rainwater treatment assembly according to any one of claims 1 to 11, the substrate cartridge comprising the fluid guider.

14. Combination of a cartridge container and a substrate cartridge according to any one of claims 1 to 11.

15. Use of a rainwater treatment assembly according to any one of claims 1 to 11 to treat rainwater.
